# EUROPÄISCHE PATENTSCHRIFT

(11) **EP 3 252 656 B1**
(45) Veröffentlichungstag und Bekanntmachung des Hinweises auf die Patenterteilung: **16.10.2024**
(21) Anmeldenummer: 16172837.3
(22) Anmeldetag: 03.06.2016
(51) Int. Cl.: G07F 11/44, G07F 17/00, G06V 20/64, G06V 20/66, B65B 35/08

(54) **VERFAHREN ZUM BEREITSTELLEN EINER VEREINZELUNGSEINRICHTUNG EINER VORRATS- UND ABGABESTATION**
METHOD FOR PROVIDING A SEPARATION DEVICE OF A STORAGE AND DISPENSING STATION
PROCÉDÉ DE MISE À DISPOSITION D'UN DISPOSITIF D'ISOLEMENT D'UNE STATION DE RÉSERVE ET DE DISTRIBUTION

(43) Veröffentlichungstag der Anmeldung: 06.12.2017
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- EP-A1- 2 703 301
- WO-A1-2013/184883
- US-A1- 2015 154 750
- US-A1- 2016 155 018
- US-B1- 8 712 163
- DONG YIN ET AL: "Technology of dispensing check based-on tablet features", ARTIFICIAL INTELLIGENCE, MANAGEMENT SCIENCE AND ELECTRONIC COMMERCE (AIMSEC), 2011 2ND INTERNATIONAL CONFERENCE ON, IEEE, 8 August 2011 (2011-08-08), pages 2460 - 2462, XP031964050, ISBN: 978-1-4577-0535-9, DOI: 10.1109/AIMSEC.2011.6011146
- RUNG-CHING CHEN ET AL: "An automatic drug image identification system based on multiple image features and dynamic weights", INTERNATION JOURNAL OF INNOVATIVE COMPUTING, INFORMATION AND CONTROL VOLUME 8, NUMBER 5A, MAY 2012, 1 May 2012 (2012-05-01), pages 2995 - 3013, XP093047944, Retrieved from the Internet <URL:http://www.ijicic.org/ijicic-11-01017.pdf> [retrieved on 20230517]
- YOUNG-BEOM LEE ET AL: "PILL-ID: Matching and Retrieval of Drug Pill Imprint Images", 2010 20TH INTERNATIONAL CONFERENCE ON PATTERN RECOGNITION (ICPR 2010) : ISTANBUL, TURKEY, 23 - 26 AUGUST 2010, IEEE, PISCATAWAY, NJ, USA, 23 August 2010 (2010-08-23), pages 2632 - 2635, XP031771110, ISBN: 978-1-4244-7542-1
- MOHD. SOBANI SITI SYAZALINA ET AL: "3D Model Reconstruction from Multi-views of 2D Images using Radon Transform", JURNAL TEKNOLOGI, vol. 74, no. 6, 28 May 2015 (2015-05-28), Malaysia, XP093047939, ISSN: 0127-9696, Retrieved from the Internet <URL:https://journals.utm.my/index.php/jurnalteknologi/article/download/4663/3246> DOI: 10.11113/jt.v74.4663

## Beschreibung

Die vorliegende Erfindung betrifft ein Verfahren zum Bereitstellen einer Vereinzelungseinrichtung eines Vorrats- und Abgabebehälters für Arzneimittelportionen.

Moderne Blisterautomaten, wie sie beispielsweise in der WO 2013/034504 A1 offenbart sind, umfassen, je nach Ausbaustufe, mehrere hundert Vorrats- und Abgabebehälter für Arzneimittelportionen. In diesen ist jeweils eine Mehrzahl von Arzneimittelportionen eines bestimmten Arzneimittels gelagert, und auf Anforderungen können einzelne Arzneimittelportionen abgegeben werden. Mit den Blisterautomaten werden die in den Vorrats- und Abgabebehältern gelagerten Arzneimittelportionen patientenindividuell gemäß den ärztlich verordneten Eingabezeitpunkten zusammengestellt und verblistert.

Zur Zusammenstellung der Arzneimittelportionen werden entsprechende Vorrats- und Abgabebehälter zur Abgabe einer oder mehrerer vereinzelter Arzneimittelportionen angesteuert. Bei der Ansteuerung eines Vorrats- und Abgabebehälters wird mit einer Vereinzelungseinrichtung, die Teil des Vorrats- und Abgabebehälters ist, eine einzelne Arzneimittelportion separiert und über eine Abgabeöffnung einer Führungseinrichtung des Blisterautomaten übergeben. Mittels der Führungseinrichtung wird eine abgegebene Arzneimittelportion, gegebenenfalls unter Zwischenschaltung einer Sammeleinrichtung, einer Verpackungseinrichtung zugeführt, welche einzelne oder mehrere Arzneimittelportionen entsprechend den ärztlichen Vorgaben verblistert.

Mit dem vorgenannten Blisterautomaten können nicht nur rezeptpflichtige Arzneimittel, sondern beispielsweise auch Nahrungsergänzungsmittel (in Form einzelner Portionen) oder ähnliche Präparate verblistert werden. Im Rahmen dieser Anmeldung sollen mit dem Begriff der Arzneimittelportion auch solche Mittel bzw. Präparate umfasst sein. Mit anderen Worten sollen sämtliche Präparate umfasst sein, die in formstabilen Portionen ausgegeben und verabreicht werden können.

Zur Vereinzelung der Arzneimittelportionen, die in einem Vorratsbehälter eines Vorrats- und Abgabebehälters gelagert sind, umfasst die Vereinzelungseinrichtung einen Rotor mit einer Mehrzahl von Kanälen, die üblicherweise am Außenumfang des Rotors angeordnet sind. Die Kanäle sind an die jeweils zu separierenden Arzneimittelportionen hinsichtlich ihrer Abmessungen bzw. Dimensionen derart angepasst, dass in einem Kanal die Arzneimittelportionen übereinander, nicht aber nebeneinander angeordnet sein können. Die Anzahl der in einem Kanal übereinander angeordneten Arzneimittelportionen ist von der genauen Ausführung der Vereinzelungseinrichtung abhängig. Sind die Kanäle derart ausgeführt, dass lediglich eine Arzneimittelportion von einem Kanal aufgenommen wird, so ist über dem über eine Abgabeöffnung gedrehten Kanal ein Rückhaltemittel angeordnet, das einen Eintritt weiterer Arzneimittelportionen verhindert. Können mehrere Arzneimittelportionen in einem Kanal aufgenommen werden, wird der Kanal üblicherweise von dem Rückhaltemittel in zwei Teile geteilt, wobei lediglich die in dem unteren Abschnitt des Kanals angeordnete Arzneimittelportion abgegeben wird.

Wie oben dargelegt, ist es erforderlich, u.a. die Abmessungen der Kanäle des Rotors der Vereinzelungseinrichtung an die Größe der zu separierenden Arzneimittelportionen anzupassen, da lediglich bei einer optimalen Anpassung der Abmessungen der Kanäle an die Abmessungen der Arzneimittelportionen eine schonende Vereinzelung der Arzneimittelportionen gewährleistet werden kann. In der EP 2 703 301 A1, die einen Blisterautomaten wie oben beschrieben mit erhöhter Betriebssicherheit betrifft, ist das vorgenannte Erfordernis bereits dargelegt. Eine exakte Anpassung gewährleistet auch eine sichere Abgabe. So kann nur bei exakter Anpassung sichergestellt werden, dass bei jedem Abgabevorgang (Rotordrehung) auch wirklich eine Arzneimittelportion abgeben wird. Bei nicht-exakter Anpassung können sich die Arzneimittelportionen in den Kanälen verkeilen und diese verstopfen. Insbesondere offenbart EP 2 703 301 A1 ein Verfahren zum Bereitstellen einer Vereinzelungseinrichtung eines Vorrats- und Abgabebehälters für Arzneimittelportionen, wobei
a) eine zu vermessende Arzneimittelportion einer bestimmten Arzneimittelart bereitgestellt wird,
b) durch manuelle Erkennung von einem Mitarbeiter Informationen über die zu vermessende Arzneimittelportion erzeugt werden,
c) die Informationen bearbeitet werden, wobei festgelegte Arzneimittel-Informationen zu der bereitgestellten Arzneimittelportion bestimmt werden, wobei diese Informationen zumindest die Dimensionen der Arzneimittelportion umfassen,
d) anhand der ermittelten Arzneimittel-Informationen eine zu den zu vereinzelnden Arzneimittelportionen passende Vereinzelungseinrichtung identifiziert wird.

Die Abmessungen bzw. Dimensionen einzelner Arzneimittelportionen unterschiedlicher Arzneimittelarten variieren stark, so dass eine Vielzahl von Vorrats- und Abgabebehältern mit unterschiedlichen Vereinzelungseinrichtungen in einem Blisterautomaten verwendet wird. Vor der Erstinbetriebnahme eines Blisterautomaten wird üblicherweise so vorgegangen, dass der Betreiber des Blisterautomaten dem Hersteller mitteilt, welche Arzneimittelarten verblistert werden sollen. Entsprechend den Vorgaben des Betreibers werden dann an die zu verblisternden Arzneimittelarten angepasste Vereinzelungseinrichtungen in den Vorrats- und Abgabebehältern verbaut und dann angepasste Vorrats- und Abgabebehälter bereitgestellt.

Welche Vereinzelungseinrichtungen verbaut werden ist abhängig von den Abmessungen bzw. Dimensionen der zu vereinzelnden Arzneimittelportionen. Bei bekannten Arzneimittelarten kann auf vorhandene angepasste Vereinzelungseinrichtungen zurückgegriffen werden.

Ist die Arzneimittelart aber neu oder wurde bei einer an sich bekannten Arzneimittelart die Form der einzelnen Arzneimittelportionen geändert, müssen die Abmessungen bzw. Dimensionen der Arzneimittelportion ermittelt werden. Dazu werden diese nach dem Stand der Technik per Hand vermessen. Dies kann auf Seiten des Betreibers erfolgen. Häufig sendet dieser "neue" Arzneimittelportionen aber auch zum Hersteller, um die neuen Arzneimittelportionen von diesem vermessen zu lassen. Diese Vorgehensweise ist allgemein zeitaufwendig und fehleranfällig. Bei beispielsweise ovalen Arzneimittelportionen kann es schwierig sein, die Länge der Arzneimittelportion fehlerfrei zu bestimmen, leichte Messfehler schleichen sich schnell ein. Wie bereits oben erwähnt ist aber eine möglichst genaue Anpassung der Vereinzelungseinrichtung an die Dimensionen der zu vereinzelnden Arzneimittelportionen notwendig, da ansonsten die Gefahr einer Beschädigung der Arzneimittelportionen bei dem Vereinzelungsvorgang erheblich steigen. Es sind daher selbst kleine Messfehler nach Möglichkeit zu vermeiden. Zur Vermeidung von Messfehlern, die sich durch das händische Vermessen einschleichen können, ist es aus der WO 2013/184883 A1 bekannt, Arzneimittelportionen automatisch zu vermessen.

Es ist Aufgabe der vorliegenden Erfindung, ein Verfahren zu schaffen, welches das Bereitstellen von Vereinzelungseinrichtungen eines Vorrats- und Abgabebehälters rasch, kostengünstig und fehlerminimiert ermöglicht.

Die Aufgabe wird gelöst durch ein Verfahren zum Bereitstellen einer Vereinzelungseinrichtung eines Vorrats- und Abgabebehälters für Arzneimittelportionen gemäß Patentanspruch 1. Erfindungsgemäß wird eine zu vermessende Arzneimittelportion einer bestimmten Arzneimittelart bereitgestellt, wobei die Dimensionen bzw. Abmessungen dieser Arzneimittelportion üblicherweise unbekannt sind.

Mit einer Aufnahmeeinrichtung wird eine Mehrzahl von Aufnahmen erzeugt, wobei die zu vermessende Arzneimittelportion zwischen den Aufnahmen um einen vorgegebenen Winkelschritt gedreht wird. Die Aufnahmen werden bildanalytisch bearbeitet und ein 3D-Modell der Arzneimittelportion wird bestimmt, wobei die Bearbeitung mit einer Steuereinrichtung vollautomatisch durchgeführt wird und wobei auf der Basis des 3D-Modells festgelegte Arzneimittel-Informationen zu der bereitgestellten Arzneimittelportion bestimmt werden, wobei diese Informationen zumindest die Dimensionen der Arzneimittelportion umfassen.

Unter "bildanalytisch bearbeitet" wird im Zuge dieser Anmeldung verstanden, dass basierend auf der zumindest einen digitalen Aufnahme der Arzneimittelportion die gewünschten Arzneimittel-Informationen ermittelt werden, wobei dem Fachmann bekannte Verfahren zur Bildbearbeitung und Bildanalyse verwendet werden. Die Bearbeitung kann mit einer entsprechenden Steuereinrichtung (beispielsweise Personalcomputer mit entsprechender Software) durchgeführt werden, so dass die benötigten Arzneimittel-Informationen rasch und zuverlässig bereitgestellt werden können.

Anhand der ermittelten Arzneimittel-Informationen wird vollautomatisch eine zu den zu vereinzelnden Arzneimittelportionen passende Vereinzelungseinrichtung identifiziert, wobei Arzneimittel-Informationen einer Mehrzahl von Arzneimittelportionen der gleichen Arzneimittelart durch Wiederholen der vorgenannten Schritte bestimmt werden und wobei anhand der Mehrzahl der ermittelten Arzneimittel-Informationen die passende Vereinzelungseinrichtung identifiziert wird.

Sobald die passende Vereinzelungseinrichtung identifiziert ist, kann diese beschafft und dem Benutzer bereitgestellt werden. Dazu kann ggf. auf einen Lagerbestand zurückgegriffen werden, ggf. ist es aber auch erforderlich, eine an die Arzneimittel-Informationen angepasste Vereinzelungseinrichtung herzustellen.

Erfindungsgemäß erfolgt die Ermittlung der Abmessungen einer Arzneimittelportion einer Arzneimittelart und die Ermittlung einer passenden Vereinzelungseinrichtung also vollautomatisch unter Anwendung von Bildbearbeitungs- und Analyseverfahren, wobei es wesentlich ist, dass das angewendete Verfahren und die Erfassungseinrichtung geeignet sind, bei so kleinen Objekten wie Arzneimittelportionen die Abmessungen bzw. Dimensionen mit einer erforderlichen Genauigkeit zu ermitteln. Entsprechende Hard- und Software ist dem Fachmann bekannt und auf dem Markt verfügbar.

Mit dem erfindungsgemäßen Verfahren kann die Identifizierung einer passenden Vereinzelungseinrichtung rasch und zuverlässig durchgeführt werden, da aufgrund der automatischen Vermessung einer Arzneimittelportion die durch einen menschlichen Benutzer bedingte Fehleranfälligkeit vermieden ist. Zwar ist die Beschaffung der notwendigen Hardware mit gewissen Kosten verbunden, diese sind aber aufgrund der rascheren Bearbeitung und der Vermeidung von fehlerhaft zugewiesenen Vereinzelungseinrichtungen rasch amortisiert.

Die Farbe einer Arzneimittelportion kann für den Abgabevorgang ebenfalls relevant sein, und zwar im Hinblick auf die Kontrolle der Abgabe als solche. Dazu kann beispielsweise mit einem Sensor ein gewisser Bereich bei der Abgabeöffnung überwacht werden. Um die Überwachung zu optimieren ist es bei einer bevorzugten Ausführungsform vorgesehen, dass bei der bildanalytischen Bearbeitung zusätzlich die Farbe der Arzneimittelportion als Teil der Arzneimittel-Informationen bestimmt wird.

Anhand der ermittelten Arzneimittel-Informationen wird eine geeignete Vereinzelungseinrichtung identifiziert. Dazu wird anhand der Abmessungen der Arzneimittelportion bestimmt, welche Vereinzelungseinrichtung geeignet ist. Bei einer bevorzugten Ausführungsform wird zum Identifizieren einer geeigneten Vereinzelungseinrichtung in einer Datenbank, in welcher Daten zu einer Mehrzahl von Vereinzelungseinrichtungen gespeichert sind, basierend auf den Arzneimittel-Informationen eine Recherche durchgeführt. Auf diese Weise kann die geeignete Vereinzelungseinrichtung rasch und fehlerfrei ermittelt werden.

Wie bereits angedeutet, sind bei modernen Blisterautomaten zahlreiche Vorrats- und Abgabebehälter verbaut, so dass bei einem Hersteller stets mehrere Vereinzelungseinrichtungen vorrätig sind, wobei es jedoch nicht gewährleistet ist, dass stets jede bekannte Vereinzelungseinrichtung, d.h. jede in einer zur Recherche herangezogenen Datenbank aufgeführte Vereinzelungseinrichtung, vorrätig ist. Bei einer bevorzugten Ausführungsform wird daher, sofern bei der Datenbankrecherche eine geeignete Vereinzelungseinrichtung identifiziert wird, ein aktueller Lagerbestand dieser Vereinzelungseinrichtung bestimmt. Die Datenbank kann die entsprechenden Bestandsinformationen umfassen, oder es kann alternativ auf eine entsprechende Datenbank des Herstellers des Blisterautomaten oder eines Dritten (Zulieferer von Vereinzelungseinrichtungen) zugegriffen werden. Sollte sich herausstellen, dass der Lagerbestand einer bestimmten Vereinzelungseinrichtung gering ist kann die Herstellung weiterer Vereinzelungseinrichtungen initiiert werden.

Da stets neue Arzneimittelarten auf den Markt kommen, kann es vorkommen, dass bei "neuen" oder sehr seltenen Abmessungskombinationen keine geeignete Vereinzelungseinrichtung ermittelt werden kann, d.h. es keine an die ermittelten Abmessungen angepasste Vereinzelungseinrichtung gibt. Bei einer bevorzugten Ausführungsform des Verfahrens werden, sofern bei der Datenbankrecherche keine geeignete Vereinzelungseinrichtung identifiziert wird, basierend auf den Arzneimittel-Informationen Modelldaten für eine geeignete Vereinzelungseinrichtung bestimmt. Anhand der automatisch erzeugten Modelldaten kann dann die geeignete Vereinzelungseinrichtung hergestellt und bereitgestellt werden. Die benötigten Vereinzelungseinrichtungen können von dem Benutzer des Blisterautomaten selber hergestellt werden, die Modelldaten können aber auch an den Hersteller oder einen Dritten übermittelt werden, und der Hersteller oder der Dritte fertigen die benötige Vereinzelungseinrichtung auf der Basis der erhaltenen Modelldaten.

Die Modelldaten können ferner dazu verwendet werden, mit einem 3D-Drucker ein Modell einer Arzneimittelportion zu drucken und mit diesem Modell die (neue) Vereinzelungseinrichtung zu testen.

Die Genauigkeit des vorgenannten Verfahrens lässt sich bei einer bevorzugten Ausführungsform noch weiter steigern, wobei bei dieser Ausführungsform in Schritt b) die Mehrzahl von Aufnahmen mit einer Aufnahmeeinrichtung mit einem telezentrischen Objektiv erzeugt wird. Bei Verwendung eines telezentrischen Objektivs (mit geeigneter Beleuchtung) passieren nur nahezu achsparallele Lichtstrahlen dieses Objektiv, so dass sich nahezu keine Messungenauigkeiten aufgrund eines variierenden Abstands Arzneimittelportion / Objektiv ergeben. Eine Variation des Abstandes kann auftreten, wenn die Arzneimittelportion, die im Laufe der Vermessung gedreht wird, nicht zentral auf einem entsprechenden Drehmittel angeordnet wird. Die Verwendung eines telezentrischen Objektivs macht also auch die Bedienung einfacher, da die zentrale Anordnung der Arzneimittelportion nicht mehr so relevant ist.

Das Bereitstellen von Vereinzelungseinrichtungen ist vor der Erstinbetriebnahme wichtig, um einem Kunden einen an seine Bedürfnisse angepassten Blisterautomaten liefern zu können. Es wird aber auch vorkommen, dass im Laufe des Betriebs des Blisterautomaten neue Arzneimittelarten zu verblistern sind, oder sich die Form der Arzneimittelportionen bekannter Arzneimittelarten ändert. Dies macht es erforderlich, bei einem Vorrats- und Abgabebehälter, welcher mit den "neuen" Arzneimittelportionen bestückt werden soll, eine neue, entsprechend angepasste Vereinzelungseinrichtung zu verwenden. Um diese zu ermitteln, muss der Betreiber eine Arzneimittelportion mit unbekannten Abmessungen dem Hersteller zusenden, welcher die Arzneimittelportion vermisst und die geeignete Vereinzelungseinrichtung identifiziert und bereitstellt. Dies ist zeitaufwendig und kostenintensiv. Auch kann es vorkommen, dass gewisse Arzneimittelportionen nicht in das Land, in welchem der Hersteller des Blisterautomaten seinen Produktionsstandort hat, eingeführt werden dürfen.

Im Nachfolgenden wird eine bevorzugte Ausführungsform des erfindungsgemäßen Verfahrens, ein Vorrats- und Abgabebehälter für Arzneimittelportionen sowie verschiedene Vorrichtungen, mit welchen Aufnahmen von Arzneimittelportionen gemacht werden können, beschrieben. In der Zeichnung zeigen
Figuren 1a und 1b Schrägansichten eines Vorrats- und Abgabebehälters;
Figuren 2a und 2b zwei Darstellungen einer Vereinzelungseinrichtung eines Vorrats- und Abgabebehälters;
Figur 3 eine schematisch Seitenansicht einer Vorrichtung zum Erfassen mehrerer Aufnahmen einer Arzneimittelportion;
Figuren 4a - 4c Draufsichten auf die in Figur 3 schematisch gezeigte Vorrichtung, wobei die Arzneimittelportion in verschiedenen Winkelstellungen dargestellt ist;
Figuren 5 und 6 jeweils eine schematische Seitenansicht einer weiteren Vorrichtung zum Erfassen einer Aufnahme einer Arzneimittelportion; und
Figur 7 ein Fließdiagramm zur bildanalytischen Bearbeitung mehrerer Aufnahmen einer Arzneimittelportion.

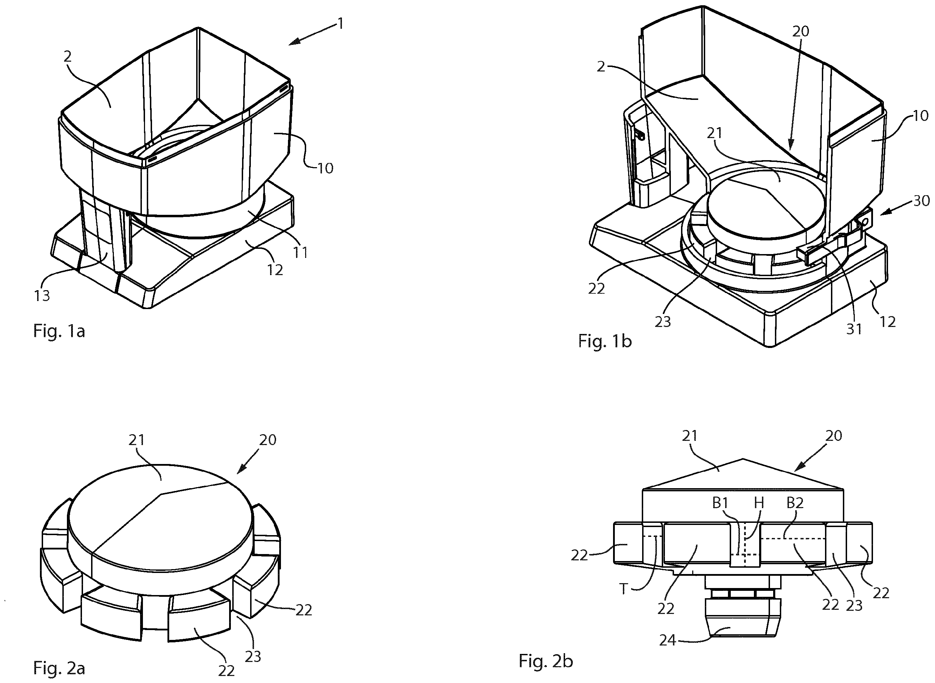

Die Figuren 1a und 1b zeigen zwei Schrägansichten eines Vorrats- und Abgabebehälters 1. Der Vorrats- und Abgabebehälter 1 umfasst ein einen Aufnahmeraum 2 für Arzneimittelportionen umschließendes Gehäuse 10, welches im unteren Abschnitt einen kreiszylinderförmigen Abschnitt 11 aufweist. Das Gehäuse 10 wird nach unten durch eine Bodenfläche begrenzt, die eine (nicht dargestellte) Abgabeöffnung aufweist, über welche eine Arzneimittelportion, die in einem an der Abgabeöffnung ausgerichteten Kanal 23 angeordnet ist, abgegeben werden kann. Wie dies insbesondere in Figur 1b zu erkennen ist, ist in dem kreiszylinderförmigen Abschnitt des Gehäuses 10 eine Vereinzelungseinrichtung 20 angeordnet, die an ihrem Außenumfang eine Mehrzahl von Kanälen 23 sowie diese separierende Vorsprünge 22 aufweist. Die Vorsprünge 22 bilden zusammen mit einem Mittelteil 21, das von einem (nicht dargestellten) Antrieb bewegt wird, die Kanäle 23. Die Vorsprünge 22 können einstückig mit dem Mittelteil 21 ausgeführt sein, es ist aber auch denkbar, dass die Vorsprünge 22 an den Außenumfang des Mittelteils 21 angesetzt sind und so die Kanäle an dem Außenumfang des Mittelteils 21 erzeugt sind.

Wie dies in Figur 1b zu erkennen ist, umfasst der Vorrats- und Abgabebehälter 1 ein Rückhaltemittel 30, welches außen an dem kreiszylinderförmigen Abschnitt 11 des Gehäuses 10 angeordnet ist. Das Rückhaltemittel 30 umfasst einen Rückhalteabschnitt 31, der über einen Schlitz in dem kreiszylinderförmigen Abschnitt 11 in das Gehäuse eingeführt ist, und zwar derart, dass das Rückhaltemittel 31 geringfügig über einer von den Vorsprüngen 22 angeordneten Ebene gehalten ist. Die Abgabeöffnung des Vorrats- und Abgabebehälters und der Rückhalteabschnitt 31 des Rückhaltemittels 30 sind derart zueinander ausgerichtet, dass der Rückhalteabschnitt 31 oberhalb der Abgabeöffnung angeordnet ist. Dadurch wird verhindert, dass in einen Kanal, der über der Abgabeöffnung angeordnet ist, weitere Arzneimittelportionen eindringen. Erst wenn dieser Kanal durch eine Bewegung des Rotors unter dem Rückhalteabschnitt 31 weggedreht wird, kann eine neue Arzneimittelportion in diesen Kanal eintreten.

Figur 2a zeigt eine Schrägansicht der Vereinzelungseinrichtung 20 mit Mittelteil 21 sowie einer Mehrzahl von Vorsprüngen 22 und einer Mehrzahl von Kanälen 23. Eine Vereinzelungseinrichtung ist eines der zentralen Bauelemente eines Vorrats- und Abgabebehälters. Aus den vorgenannten Gründen sind die Vereinzelungseinrichtungen üblicherweise derart in dem Vorrats- und Abgabebehälter verbaut, dass diese schnell und unkompliziert durch eine andere Vereinzelungseinrichtung ersetzt werden können.

Figur 2b zeigt eine Seitenansicht der Vereinzelungseinrichtung 20, wobei der mittlere Kanal orthogonal zur Zeichnungsebene ausgerichtet ist. Wie dies bereits weiter oben ausgeführt ist, müssen die Abmessungen des Kanals, sprich seine Breite B1, seine Höhe H sowie seine Tiefe T, sehr genau an die Abmessungen der zu vereinzelnden Arzneimittelportionen angepasst sein, damit bei dem Vereinzeln der Arzneimittelportionen eine Beschädigung dieser durch die Geometrie der Kanäle und der Vorsprünge vermieden werden kann.

Bei der gezeigten Ausführungsform sind die Kanäle beispielsweise derart angeordnet, dass deren Breite geringer als die Breite der die Kanäle separierenden Vorsprünge 22 ist. Bei anderen Ausführungsformen ist es aber auch denkbar, dass die Breite der Vorsprünge nur geringfügig größer oder gar kleiner als die Breite der Kanäle selber ist. Ferner ist es vorstellbar, dass die Kanäle deutlich breiter ausgeführt sind, und dass die Breite beispielsweise annähernd der Höhe der Kanäle entspricht.

Wie dies Figur 2b zu entnehmen ist, kann die Vereinzelungseinrichtung 20 über einen Ansatz 24 verfügen, der in eine entsprechende Öffnung in des Vorrats- und Abgabebehälters einführbar ist, und über welchen die Vereinzelungseinrichtung mit einem Motor gekoppelt werden kann.

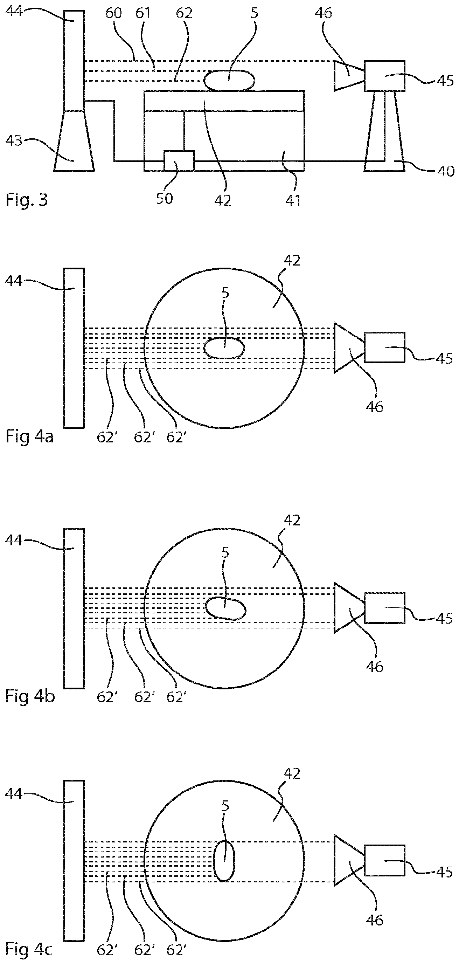

Figur 3 zeigt eine schematische Seitenansicht einer Vorrichtung bzw. Anordnung zum Erfassen einer Mehrzahl von Aufnahmen einer Arzneimittelportion 5. Die Figuren 4a - 4c zeigen verschiedene Draufsichten der gleichen Vorrichtung, wobei die Arzneimittelportion bei den Figuren 4a - 4c in verschiedenen Winkelstellungen dargestellt ist.

Die Vorrichtung umfasst eine Durchlicht-Lichtquelle 44, die auf einer Stütze 43 angeordnet ist. Die Vorrichtung umfasst ferner eine auf einer Stütze 40 angeordnete Erfassungseinrichtung 45, 46, die bei dieser Ausführungsform als Kamera 45 mit Objektiv 46 ausgeführt ist. Zwischen der Erfassungseinrichtung und der Durchlicht-Lichtquelle 44 ist ein Tisch 41 mit einem Drehteller 42 angeordnet, auf welchem eine Arzneimittelportion 5 angeordnet ist. Der Drehteller 42 macht eine feine Einstellung des Drehwinkels des Drehtellers in Bezug auf die Achse Durchlichtquelle/Erfassungseinrichtung möglich.

Bei der Durchlicht-Lichtquelle 44 kann beispielsweise ein diffuses Flächenlicht mit roter Lichtfarbe verwendet werden, als Kamera kann beispielsweise eine IDS UI-5480CP-M-GL Kamera mit einem 5-Megapixel-Sensor und einer Auflösung von 2.560x1.920 Pixeln verwendet werden. Die Kamera kann beispielsweise mit einem 35mm-Objektiv mit Zwischenring eingesetzt werden.

Zumindest der Drehtisch 42 und die Erfassungseinrichtung 45, 46 sind mit einer Steuereinrichtung 50 verbunden, die den Drehtisch steuert und bei entsprechenden Winkelstellungen die Erfassungseinrichtung zum Erzeugen von Aufnahmen ansteuert. Die Steuereinrichtung 50 kann auch die bildanalytische Bearbeitung und die Identifikation der passenden Vereinzelungseinrichtung durchführen. Alternativ können diese Verfahrensschritte aber auch von einer separaten Steuereinrichtung, beispielsweise einem PC mit entsprechender Software, durchgeführt werden. Dieser kann mit der Steuereinrichtung 50 über Mittel zur Datenfernübertragung verbunden sein.

Wie bereits aus der Beschreibung dieser Ausführungsform ersichtlich ist, werden die Stützen 40, 43 sowie der Tisch 41 lediglich verwendet um die Handhabung der Gesamtanordnung zu vereinfachen, sie sind für das erfindungsgemäßen Verfahren sowie die Anordnung nicht wesentlich.

Bei Verwendung der vorgenannten Anordnung bzw. Vorrichtung werden die Arzneimittelportionen mit der Erfassungseinrichtung, hier einer Kamera, im Durchlicht betrachtet, um eine Mehrzahl von zweidimensionalen Aufnahmen bzw. Projektionen zu erhalten. Die Arzneimittel-Informationen werden nicht direkt aus einer einzigen 2D-Aufnahme ermittelt, sondern die Arzneimittelportion 5 wird auf dem Drehteller 42 angeordnet, und es werden mehrere Aufnahmen der Arzneimittelportion erzeugt, wobei die Arzneimittelportion 5 nach jeder Aufnahme um einen kleinen Winkelschritt (z. B. 1 oder 2 Grad) weitergedreht wird. Man erhält auf diese Weise 2D-Aufnahmen bzw. -Projektionen aus einer Mehrzahl verschiedener Richtungen. Aufgrund der Formgebung von Arzneimittelportionen hat man diese nach einem Gesamtdrehwinkel von 180° näherungsweise aus allen relevanten Raumrichtungen erfasst, und durch Überlagerung der aus den verschiedenen Richtungen erhaltenen 2D-Aufnahmen bzw. -Projektionen kann dann bei der bildanalytischen Bearbeitung ein 3D-Model mit hoher Auflösung rekonstruiert werden. Auf der Basis des vorgenannten 3D-Models werden dann erfindungsgemäß die festgelegten Arzneimittel-Informationen bestimmt, wobei diese Informationen zumindest die Dimensionen der Arzneimittelportion umfassen. Anhand dieser Arzneimittel-Informationen wird dann die passende Vereinzelungseinrichtung identifiziert und im Anschluss daran dem Betreiber bereitgestellt.

Bei Figur 3 ist der Strahlengang von der Durchlicht-Lichtquelle 44 zu dem Objektiv 46 der Kamera 45 anhand der Strahlen 60, 61, 62 schematisch dargestellt. Es ist zu erkennen, dass von der Arzneimittelportion die Strahlen 62, 61 verdeckt werden während Strahl 60 ungehindert auf das Objektiv trifft.

Wie bereits oben dargelegt, ergibt sich bei Verwendung eines klassischen (entozentrischen) Objektivs das Problem, dass der Vergrößerungsmaßstab von der Entfernung zwischen der Arzneimittelportion 5 und dem Objektiv 46 abhängt. Wird die Arzneimittelportion näher an das Objektiv herangebracht (z. B. durch die Drehung des Drehtisches 42 bei nicht-zentrischer Ausrichtung der Arzneimittelportion auf dem Drehtisch) vergrößert sich die Abbildung entsprechend. Dies führt bei dem zur Bildanalyse verwendeten Rekonstruktionsprinzip dazu, dass sich für die Rekonstruktion einer Scheibe der Arzneimittelportion relevante Objektbereiche zwischen den einzelnen Aufnahmen in ihrer vertikalen Position verändern, was zu Fehlern bei der Rekonstruktion führt. Um diese Fehler zu vermeiden kann bei dieser Anordnung bzw. Vorrichtung ein telezentrisches Objektiv sowie eine telezentrische Beleuchtung bei der Durchlicht-Lichtquelle 44 verwendet werden.

Ein telezentrisches Objektiv zeichnet sich dadurch aus, dass nur Lichtstrahlen mit einem nahezu achsparallelen Strahlengang die Optik passieren. Anders als bei entozentrischen Objektiven ist der Abbildungsmaßstab im Schärfentiefebereich des Objektivs daher (nahezu) unabhängig vom Abstand zwischen Arzneimittelportion und Objektiv. Die telezentrische Beleuchtung sendet Licht aus, bei dem alle Lichtstrahlen achsparallel zur optischen Achse ausgerichtet sind. Dies ermöglicht eine sehr scharfe Abbildung der Ränder der Arzneimittelportion und vermeidet Spiegelungen durch seitlich auf eine Arzneimittelportion auftreffendes Licht.

Telezentrisches Objektiv und telezentrische Beleuchtung sind recht kostenintensiv, so dass deren Verwendung lediglich optional ist. Mit geeigneter Software und entsprechender "normaler" Beleuchtung und "normalem" Objektiv lassen sich ebenfalls Ergebnisse erzielen, deren Genauigkeit ausreicht, um eine passende Vereinzelungseinrichtung zu identifizieren oder entsprechende Modelldaten zu liefern (sollte keine geeignete Vereinzelungseinrichtung vorhanden sein).

Wie bereits angedeutet, wird der Drehteller zwischen den einzelnen Aufnahmen um einen gewissen Drehwinkel verstellt. Dazu kann man den Drehteller zwischen den einzelnen Schritten anhalten und in der Ruhestellung des Drehtisches mit der Erfassungseinrichtung eine Aufnahme erzeugen. Alternativ kann der Drehtisch kontinuierlich gedreht werden. Dann ist der Drehtisch beispielsweise mit einem Encoder gekoppelt, der die mechanische Drehbewegung des Drehtisches in elektrische Signale umwandeln, welche wiederum das Erzeugen einer Aufnahme mit der Erfassungseinrichtung auslösen.

Ferner ist es möglich, die Drehbühne kontinuierlich mit konstanter, bekannter Geschwindigkeit zu drehen. Bei bekannter Drehgeschwindigkeit ist die benötigte Zeit für eine halbe Umdrehung des Drehtisches bekannt, so dass die Zeitpunkte bekannt sind, zu denen mit der Erfassungseinrichtung eine Aufnahme der Arzneimittelportion zu erzeugen ist. Wie die mehreren Aufnahmen der Arzneimittelportion im Einzelnen erzeugt werden, ist jedoch für die Erfindung als solche nicht relevant. Wichtig ist lediglich im Rahmen dieser Ausführungsform, dass eine Mehrzahl von Aufnahmen erzeugt wird, wobei es bevorzugt ist, dass die Erfassungseinrichtung dabei ein telezentrisches Objektiv umfasst.

Die Figuren 4a - 4c zeigen Draufsichten auf die in Figur 3 gezeigte Anordnung, wobei die Arzneimittelportion 5 in drei verschiedenen Drehwinkeln gezeigt ist. Anhand der lediglich schematisch angedeuteten Strahlen 62' ist die Auswirkung der Rotation auf den Strahlengang zu erkennen. Die weiteren Bauteile entsprechen denen mit Bezug auf Figur 3 beschriebenen.

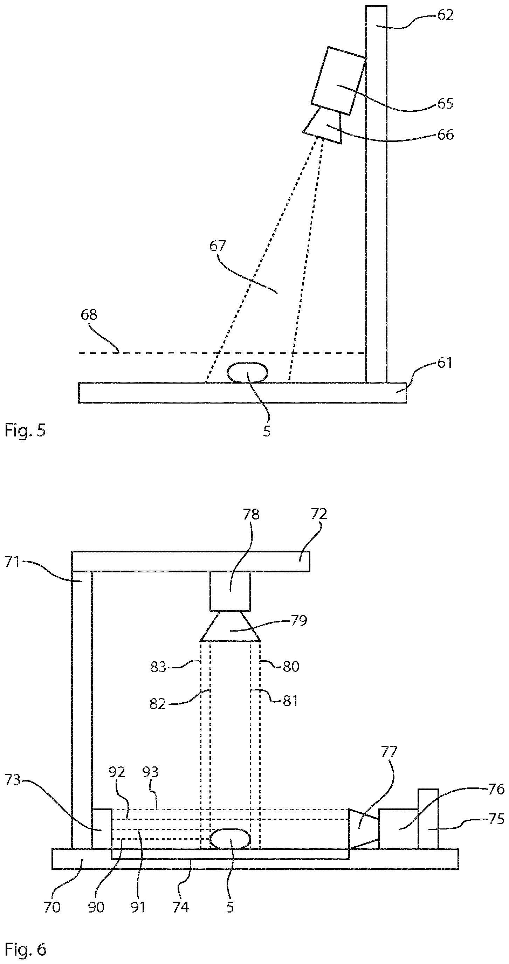

Figur 5 zeigt eine schematische Seitenansicht einer weiteren Vorrichtung bzw. Anordnung, welche zum Erfassen einer Aufnahme einer Arzneimittelportion geeignet ist. Die Vorrichtung umfasst eine Auflagefläche 61, an der ein Stativ 62 angeordnet ist. Im oberen Bereich des Statives 62 ist eine Erfassungseinrichtung 65, 66 angeordnet. Bei dieser Ausführungsform handelt es sich bei der Erfassungseinrichtung um einen 3D-Scanner. Dieser kann durch ein Stereokamerasystem mit einem mittig positionierten LED-Projektor gebildet sein. Der LED-Projektor sendet einen Lichtkegel 67 auf die Auflagefläche 61, und es ist darauf zu achten, dass die zu vermessende Arzneimittelportion 5 in diesem Lichtkegel angeordnet ist.

Zum Erzeugen einer Aufnahme wird ein Streifenmuster aus blauem, rotem oder IR-Licht auf die zu vermessende Arzneimittelportion 5 projiziert, wobei die Ortsfrequenz und Phasenverschiebung des Lichts mit der Zeit variiert werden. Mittels eines Triangulationsverfahrens kann so zu jedem Kamerapixel neben einem Intensitätswert und der Position in X- und Y-Richtung auch die jeweilige Distanz zum Kamerasystem ermittelt werden, und zwar ohne dass die Arzneimittelportion oder der 3D-Scanner selber bewegt werden müssen.

Der Messvorgang selber nimmt je nach eingestellter Belichtungszeit weniger als eine Sekunde bis hin zu einigen Sekunden in Anspruch. Bei dieser Anordnung bzw. Vorrichtung beträgt die minimale Entfernung zu dem Messobjekt etwa 150mm, und der Messbereich hat eine Größe von 60x105mm. Mit dem 3D-Scanner wird eine Aufnahme in Form einer 3D-Punktewolke erzeugt, aus welcher bei der bildanalytischen Bearbeitung die festgelegten Arzneimittel-Informationen bestimmt werden, wobei diese Informationen zumindest die Dimensionen der Arzneimittelportion umfassen.

Figur 6 zeigt eine weitere Vorrichtung bzw. Anordnung zum Erfassen einer Aufnahme einer Arzneimittelportion. Die Vorrichtung bzw. Anordnung umfasst eine Bodenfläche 70 mit einer Ausnehmung, in welcher eine Durchlicht-Lichtquelle 74 angeordnet ist. Auf der Bodenfläche 70 sind zwei senkrechte Stützen 71, 75 angeordnet. An der Stütze 71 ist ein horizontaler Arm 72 befestigt, an welchem eine Erfassungseinrichtung 78, 79 angeordnet ist. Eine vergleichbare Erfassungseinrichtung 76, 77 ist an der Stütze 75 angeordnet, und gegenüber dieser Erfassungseinrichtung 76, 77 ist eine zweite Durchlicht-Lichtquelle 73 angeordnet. Bei den Erfassungseinrichtungen 76, 77 und 78, 79 handelt es sich bei dieser Ausführungsform um Matrix-Kameras, d. h. Kameras mit matrixartigem Sensor, denen gegenüber jeweils eine Durchlicht-Lichtquelle 74, 73 angeordnet ist.

Die optische Achse der Erfassungseinrichtung 78, 79 ist senkrecht auf die Auflagefläche der Durchlicht-Lichtquelle 74 ausgerichtet, und die optische Achse der Erfassungseinrichtung 76, 77 ist senkrecht auf die Oberfläche der Durchlicht-Lichtquelle 73 ausgerichtet, so dass mit den

Erfassungseinrichtungen der jeweils maximale Querschnitt der auf der Durchlicht-Lichtquelle 74 aufliegenden Arzneimittelportion erfasst werden kann.

Bei Abbildung 6 ist der Strahlengang einiger von den Durchlicht-Lichtquellen 73, 74 ausgesendeten Lichtstrahlen schematisch wiedergegeben. Bedingt durch die Form der Arzneimittelportion sind die Strahlen 90, 91 der Durchlicht-Lichtquelle 73 von der Arzneimittelportion 5 verdeckt, während die Strahlen 92, 93 von der Erfassungseinrichtung 76, 77 erfasst werden. Entsprechendes gilt für die Erfassungseinrichtung 78, 79, die lediglich von der Durchlicht-Lichtquelle 74 ausgestrahlte Lichtstrahlen 80 bis 83 empfängt, während die im Bereich der Arzneimittelportion abgestrahlten Lichtstrahlen von der Arzneimittelportion blockiert sind.

Aufgrund der Konstruktion der in Figur 6 dargestellten Vorrichtung bzw. Anordnung können zwar keine 3D-Aufnahmen erzeugt werden, aufgrund der Verwendung von zwei Erfassungseinrichtungen und zwei Durchlicht-Lichtquellen kann jedoch eine Aufnahme erzeugt werden, anhand welcher bei bildanalytischer Bearbeitung sämtliche notwendigen Abmessungen der auf der Durchlicht-Lichtquelle 74 aufliegenden Arzneimittelportion 5 ermittelt werden können.

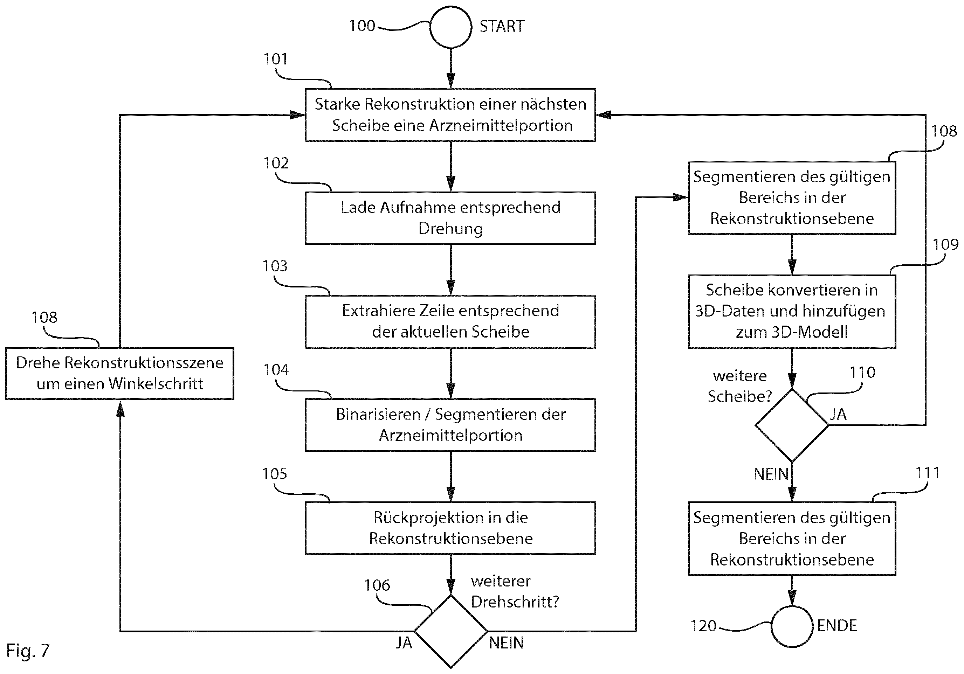

Im Nachfolgenden wird unter Bezugnahme auf das Fließdiagramm in Figur 7 kurz auf die bildanalytische Bearbeitung der Aufnahmen eingegangen, die mit einer Vorrichtung bzw. Anordnung gemäß den Figuren 3, 4a - 4c erzeugt werden. Wie bereits angedeutet, wird bei dem Erzeugen der Aufnahmen eine Arzneimittelportion auf einen Drehtisch aufgelegt, welcher sich zwischen einer Erfassungseinrichtung und einer Durchlicht-Lichtquelle befindet. Von der Arzneimittelportion werden bei verschiedenen Drehwinkeln Aufnahmen erzeugt, so dass bei einem Winkelschritt von beispielsweise einem Grad eine Serie von 180 Einzelaufnahmen erzeugt wird. Im Hinblick auf die Formgebung üblicher Arzneimittelportionen würde sich das Ergebnis bei einem Winkelbereich von mehr als 180 Grad wiederholen, was eine überflüssige Bearbeitung nach sich ziehen würde.

Bei einem Winkelschritt von einem Grad erhält man so 180 Aufnahmen bzw. Projektionen der Arzneimittelportion auf die zweidimensionale Sensorfläche der Erfassungseinrichtung, also Aufnahmen aus N = 180 unterschiedlichen Raumrichtungen. Aus den so erhaltenen 180 zweidimensionalen Projektionen bzw. Aufnahmen der Arzneimittelportion wird anschließend Schicht für Schicht ein 3D-Model rekonstruiert, anhand dessen dann die festgelegten Arzneimittel-Informationen zu der Arzneimittelportion bestimmt werden.

Die eigentliche Rekonstruktion des 3D-Models ist detailliert in dem Ablaufdiagramm in Figur 7 wiedergegeben. Anhand des Fließdiagrammes von Figur 7 ist dem Fachmann sofort ersichtlich, wie die bildanalytische Bearbeitung bei einer Verwendung einer Vorrichtung gemäß Figuren 3, 4a - 4c im Detail abläuft.

Zur Rekonstruktion des 3D-Models werden die Aufnahmen zunächst binarisiert, d. h. die einzelnen Pixel der Aufnahmen werden als "zur Arzneimittelportion gehörig" oder als "zum Hintergrund gehörig" markiert. Die Rekonstruktion des 3D-Models läuft zeilen- bzw. schichtweise ab. Jede Schicht des 3D-Models entspricht einer Zeile des Sensors der Erfassungseinrichtung. Zur Rekonstruktion einer Schicht sind die Informationen der jeweiligen Zeilen sämtlicher Einzelaufnahmen notwendig.

Beispielsweise wird für die Rekonstruktion der obersten Scheibe die oberste Zeile sämtlicher Einzelaufnahmen herangezogen. Die Informationen aus einer Zeile sind eine eindimensionale Projektion einer Scheibe der Arzneimittelportion auf die entsprechende Kamerasensorzeile. Diese eindimensionalen Projektionen werden aus der dem jeweiligen Aufnahmewinkel entsprechenden Richtung in einen zweidimensionalen Raum projiziert ("Rückprojektion", 105). Aus einer Überlagerung sämtlicher N zweidimensionaler Projektionen ergibt sich dann die der jeweiligen Kamerazeile entsprechenden Schicht der Arzneimittelportion.

Wenn dieser Vorgang für sämtliche Kamerazeilen, in denen mindestens ein Pixel zur Arzneimittelportion gehört, durchgeführt wurde, ergibt sich durch ein "Stapeln" der wie oben beschrieben erhaltenen 2D-Schichten im dreidimensionalen Raum das 3D-Model der Arzneimittelportion, aus welchem dann die Arzneimittelportionen ermittelt werden. Anhand der ermittelten Arzneimittel-Informationen wird dann die passende Vereinzelungseinrichtung identifiziert und dem Benutzer bereitgestellt.

## Patentansprüche

1. Verfahren zum Bereitstellen einer Vereinzelungseinrichtung (20) eines Vorrats- und Abgabebehälters (1) für Arzneimittelportionen, wobei
a) eine zu vermessende Arzneimittelportion einer bestimmten Arzneimittelart bereitgestellt wird,
b) mit einer Aufnahmeeinrichtung eine Mehrzahl von Aufnahmen erzeugt wird, wobei die zu vermessende Arzneimittelportion zwischen den Aufnahmen um einen vorgegebenen Winkelschritt gedreht wird,
c) die Aufnahmen bildanalytisch bearbeitet werden und ein 3D-Modell der Arzneimittelportion bestimmt wird, wobei die Bearbeitung mit einer Steuereinrichtung vollautomatisch durchgeführt wird und wobei auf der Basis des 3D-Modells festgelegte Arzneimittel-Informationen zu der bereitgestellten Arzneimittelportion bestimmt werden, wobei diese Informationen zumindest die Dimensionen der Arzneimittelportion umfassen,
d) anhand der ermittelten Arzneimittel-Informationen eine zu den zu vereinzelnden Arzneimittelportionen passende Vereinzelungseinrichtung (20) vollautomatisch identifiziert wird,
wobei Arzneimittel-Informationen einer Mehrzahl von Arzneimittelportionen der gleichen Arzneimittelart durch Wiederholen der Schritte a) - c) bestimmt werden und
wobei anhand der Mehrzahl der ermittelten Arzneimittel-Informationen die passende Vereinzelungseinrichtung identifiziert wird.

2. Verfahren zum Bereitstellen einer Vereinzelungseinrichtung (20) eines Vorrats- und Abgabebehälters (1) für Arzneimittelportionen nach Anspruch 1,
**dadurch gekennzeichnet,**
**dass** bei der bildanalytischen Bearbeitung zusätzlich die Farbe der Arzneimittelportion als Teil der Arzneimittel-Informationen bestimmt wird.

3. Verfahren zum Bereitstellen einer Vereinzelungseinrichtung (20) eines Vorrats- und Abgabebehälters (1) für Arzneimittelportionen nach einem der Ansprüche 1 oder 2,
**dadurch gekennzeichnet,**
**dass** zum Ermitteln einer geeigneten Vereinzelungseinrichtung in einer Datenbank, in welcher Daten zu einer Mehrzahl von Vereinzelungseinrichtungen gespeichert sind, basierend auf den Arzneimittel-Informationen eine Recherche durchgeführt wird.

4. Verfahren zum Bereitstellen einer Vereinzelungseinrichtung (20) eines Vorrats- und Abgabebehälters (1) für Arzneimittelportionen nach Anspruch 3,
**dadurch gekennzeichnet,**
**dass**, sofern bei der Datenbankrecherche eine geeignete Vereinzelungseinrichtung ermittelt wird, ein aktueller Bestand dieser Vereinzelungseinrichtung bestimmt wird.

5. Verfahren zum Bereitstellen einer Vereinzelungseinrichtung (20) eines Vorrats- und Abgabebehälters (1) für Arzneimittelportionen nach Anspruch 3 oder 4,
**dadurch gekennzeichnet,**
**dass**, sofern bei der Datenbankrecherche keine geeignete Vereinzelungseinrichtung ermittelt wird, basierend auf den Arzneimittel-Informationen Modelldaten für eine geeignete Vereinzelungseinrichtung bestimmt werden.

6. Verfahren zum Bereitstellen einer Vereinzelungseinrichtung (20) eines Vorrats- und Abgabebehälters (1) für Arzneimittelportionen nach Anspruch 1,
**dadurch gekennzeichnet,**
**dass** in Schritt b) die Mehrzahl von Aufnahmen mit einer Aufnahmeeinrichtung mit einem telezentrischen Objektiv erzeugt wird.

## Claims

1. A method for providing a singling device (20) of a storage and dispensing container (1) for drug portions, wherein
a) a to-be-measured drug portion of a specific drug type is provided;
b) a plurality of images is generated by an imaging device, wherein the to-be-measured drug portion is rotated between the images by a specified angular step;
c) the images are image-analytically processed and a 3D model of the drug portions is determined, wherein the processing is carried out in a fully automated manner by a control device, and wherein specified drug information based on the 3D model for the provided drug portion is determined, wherein this information comprises at least the dimensions of the drug portion;
d) on the basis of the ascertained drug information, a singling device (20) fitting the drug portions to be singularized is identified in a fully automated manner,
wherein drug information of a plurality of drug portions of the same drug type are determined by repeating steps a) through c) and
wherein on the basis of the plurality of the ascertained drug information, the fitting singling device is identified.

2. The method for providing a singling device (20) of a storage and dispensing container (1) for drug portions according to Claim 1,
**characterized in that**
during the image-analytical processing, the color of the drug portion is additionally determined as part of the drug information.

3. The method for providing a singling device (20) of a storage and dispensing container (1) for drug portions according to one of Claims 1 or 2,
**characterized in that**
for ascertaining a suitable singling device, an inquiry is made on the basis of the drug information in a database, in which data for a plurality of singling devices are stored.

4. The method for providing a singling device (20) of a storage and dispensing container (1) for drug portions according to Claim 3,
**characterized in that**
as long as a suitable singling device is identified in the database inquiry, a current inventory of this singling device is determined.

5. The method for providing a singling device (20) of a storage and dispensing container (1) for drug portions according to Claim 3 or 4,
**characterized in that**
as long as no suitable singling device is identified in the database inquiry, model data for a suitable singling device are determined on the basis of the drug information.

6. The method for providing a singling device (20) of a storage and dispensing container (1) for drug portions according to Claim 1,
**characterized in that**
in step b) the plurality of images are generated by an imaging device having a telecentric lens.

## Revendications

1. Procédé de mise à disposition d'un dispositif de séparation (20) d'un récipient de stockage et de distribution (1) pour des portions de médicaments, dans lequel
a) une portion de médicament à mesurer d'un type de médicament déterminé est mise à disposition,
b) une pluralité de prises de vue est réalisée avec un dispositif de prise de vue, la portion de médicament à mesurer étant tournée d'un pas angulaire prédéfini entre les prises de vue,
c) les prises de vue sont traitées par analyse d'image et un modèle 3D de la portion de médicament est déterminé, le traitement étant effectué de manière entièrement automatique à l'aide d'un dispositif de commande et des informations sur le médicament déterminées sur la base du modèle 3D étant déterminées pour la portion de médicament mise à disposition, ces informations comprenant au moins les dimensions de la portion de médicament,
d) à l'aide des informations sur les médicaments déterminées, un dispositif de séparation (20) adapté aux portions de médicaments à séparer est identifié de manière entièrement automatique,
les informations sur les médicaments d'une pluralité de portions de médicaments du même type de médicament étant déterminées par la répétition des étapes a) - c), et
le dispositif de séparation approprié étant identifié à l'aide de la pluralité des informations sur les médicaments déterminées.

2. Procédé de mise à disposition d'un dispositif de séparation (20) d'un récipient de stockage et de distribution (1) pour des portions de médicaments selon la revendication 1,
**caractérisé en ce**
**que**, lors du traitement analytique d'image, on détermine en outre la couleur de la portion de médicament en tant que partie des informations sur le médicament.

3. Procédé de mise à disposition d'un dispositif de séparation (20) d'un récipient de stockage et de distribution (1) pour portions de médicaments selon l'une des revendications 1 ou 2,
**caractérisé en ce**
**que**, pour déterminer un dispositif de séparation approprié, une recherche est effectuée dans une base de données, dans laquelle sont enregistrées des données relatives à une pluralité de dispositifs de séparation, sur la base des informations sur le médicament.

4. Procédé de mise à disposition d'un dispositif de séparation (20) d'un récipient de stockage et de distribution (1) pour des portions de médicaments selon la revendication 3,
**caractérisé en ce**
**que**, dans la mesure où un dispositif de séparation approprié est déterminé lors de la recherche dans la base de données, un stock actuel de ce dispositif de séparation est déterminé.

5. Procédé de mise à disposition d'un dispositif de séparation (20) d'un récipient de stockage et de distribution (1) pour portions de médicaments selon la revendication 3 ou 4,
**caractérisé en ce**
**que**, dans la mesure où aucun dispositif de séparation approprié n'est déterminé lors de la recherche dans la base de données, des données de modèle pour un dispositif de séparation approprié sont déterminées sur la base des informations sur le médicament.

6. Procédé de mise à disposition d'un dispositif de séparation (20) d'un récipient de stockage et de distribution (1) pour des portions de médicaments selon la revendication 1,
**caractérisé en ce**
**que**, à l'étape b), la pluralité de prises de vue est générée avec un dispositif de prise de vue doté d'un objectif télécentrique.
